# EUROPÄISCHE PATENTANMELDUNG

(11) **EP 3 748 228 A2**
(43) Veröffentlichungstag der Anmeldung: **09.12.2020**
(21) Anmeldenummer: 20178158.0
(22) Anmeldetag: 04.06.2020
(51) Int. Cl.: F23D 11/38, F23D 14/58, F23D 14/24, F23D 11/40, F23D 17/00, F23D 14/70

(54) **BRENNER MIT REDUZIERTER FLAMMENTEMPERATUR UND STICKOXIDAUSSTOSS**

(30) Priorität: 04.06.2019 DE 102019114954
(71) Anmelder: Kueppers Solutions GmbH, 45881 Gelsenkirchen (DE)
(72) Erfinder: te Kaat, Jens, 44225 Dortmund (DE)
(74) Vertreter: Meinke, Jochen

(57) **Zusammenfassung**

Die Erfindung betrifft einen Brenner 1 mit einem Gehäuse 2, an dem ein Brennrohr 3 angeordnet ist, wobei das Brennrohr 3 an dem an dem Gehäuse 2 abgewandten Ende eine Öffnung 4 aufweist, und wobei das Gehäuse 2 wenigstens zwei voneinander getrennte Kanäle 6, 7, 7' aufweist, durch die unterschiedliche Stoffe, insbesondere ein Brennstoff und ein Oxidator durchströmen, die sich in einer Brennkammer 8 vermischen, wobei die Stoffe in einem Brennstoffdüsensystem 5, 5' münden, das im Wesentlichen kreisrund angeordnet ist, und so eingerichtet ist, dass es auf wenigstens einem äußeren Ring 12 ein magereres, auf wenigstens einem inneren Ring 13 ein fetteres Gemisch, insbesondere Brennstoff-/Oxidator-Gemisch erzeugt wobei die Elemente des Brennstoffdüsensystems 5, 5' möglichst dünn, schlank und stromlinienförmig ausgebildet, das Flächenverhältnis des inneren Rings 13 zu dem des äußeren Rings 12 1:2,5 bis 1:3,9, vorzugsweise 1:3,1 beträgt und/oder der maximale Drallwinkel (α) des Brennstoffdüsensystems 5, 5' außen zwischen 30° bis 60°, vorzugsweise 48 ° beträgt und von außen nach innen kontinuierlich abnimmt. Ebenso können die Drallelemente bogenförmig ausgelegt sein.

## Beschreibung

Die Erfindung betrifft einen Brenner mit reduzierter Flammentemperatur und Stickoxidausstoß.

Für die Verbrennung des mit einem Sauerstoffträger gemischten Brennstoffs dient ein Brenner mit einem Brennerkopf, der im Wesentlichen einen rohrförmigen Kanal aufweist, in welchem über ein Gebläse der Sauerstoffträger, beispielsweise Luft, ausströmt und sich dabei mit dem Brennstoff, beispielsweise Gas, vermischt, das über ein Verteilersystem in einen rohrförmigen Kanal geleitet wird. Eine Zündeinrichtung sorgt für die Entzündung der Mischung aus Sauerstoffträger und Brennstoff, wodurch die Verbrennung eingeleitet wird.

Derartige Brennerköpfe stellen eine Belastung für die Umwelt dar, da sie bei der Verbrennung erzeugte Stickoxide (NOₓ) in die Atmosphäre abgeben. Deshalb wurden bereits Brenner mit Brennerköpfen entwickelt, bei denen die Produktion dieser Stickoxide reduziert werden kann.

Aus der italienischen Patentanmeldung 85 622 - A/90 ist ein Brennerkopf bekannt, bei dem die Reduzierung der Stickoxide mithilfe von Verteilereinrichtungen bei der Zuführung des Brennstoffs erreicht wird. Der Verteiler befindet sich im Inneren des vorderen Teils des Zuführrohres für die Verbrennungsluft und besteht aus ringförmigen Zwischenräumen, die rechtwinklig zur Achse des Zuführrohres verlaufen und durch zueinander koaxiale Ringe begrenzt sind, die über Abstandselemente miteinander verbunden sind.

Aus der weiteren italienischen Patentanmeldung VI 91 A 42 ist ein aus einem Block bestehender Brenner bekannt, bei dem die Stickoxide dadurch abgebaut werden, dass ein Teil der während der Verbrennung erzeugten Rauchgase in das Innere des Brennerkopfes zurückgeleitet wird.

In der weiteren italienischen Patentanmeldung XI 91 A 166 wird ein Brenner vorgeschlagen, bei dem zur Reduzierung der Stickoxiderzeugung eine Reihe von Öffnungen in den Außenumfang des Zuführkanals für die Verbrennungsluft eingearbeitet sind.

Aus der DE 195 42 73 B4 ist ein Brennerkopf für Brenner mit einem rohrförmigen Körper für die Zuführung eines Sauerstoffträgers in eine Brennkammer bekannt, bei dem eine oder mehrere Rohrleitungen für die Zuführung eines Brennstoffs in die Brennkammer vorgesehen sind, wobei die Rohrleitungen in dem rohrförmigen Körper verlaufen und über einen Zuführkanal mit dem Brennstoff versorgt werden. Zusätzlich ist ein konvergierendes Übergangsstück am Ende des rohrförmigen Körpers vorgesehen, das in die Brennkammer hineinragt, wobei die Konvergenz in den Innenraum der Brennkammer weist. Weiter ist wenigstens eine Zündeinrichtung, die in dem rohrförmigen f-Körper in der Nähe des konvergierenden Übergangsstücks liegt, vorgesehen, wobei die Austrittsöffnung jeder Rohrleitung für die Zuführung des Brennstoffs innerhalb einer Zone des rohrförmigen Körpers liegt, welche durch das Konvergieren der Übergangsstücke begrenzt ist und in der geneigten Wandfläche des Übergangstückes liegt, wodurch die Brennstoffströmung im Wesentlichen nach Außen und in die Zone größerer Strömungsgeschwindigkeit des Sauerstoffträgerstroms gelangt. Auf diese Weise wird der Gasfluss gegen den Außenbereich der Luftströmung gerichtet, die beim Durchtritt durch das konvergierenden Übergangsstücks beschleunigt wird und darüber den Gasfluss weit in das Innere der Brennkammer mitreißt. Gleichzeitig bewirkt die Beschleunigung der Luftströmung einen Unterdruck im Bereich der Brennkammer, sodass ein Teil der bei der Verbrennung erzeugten Rauchgase in die Flamme zurückgeführt wird. Hierdurch werden eine Reduktion der Flammentemperatur und eine geringere Stickoxidkonzentration erreicht.

Grundsätzlich sind gattungsgemäße Brennvorrichtungen bekannt, die in einem Brennvorgang chemische Energie in thermische Energie umwandeln. Bei diesem Brennvorgang wird wenigstens ein Oxidationsmittel, bevorzugt Luft beziehungsweise Sauerstoff, mit einem Brennstoff in der Brennkammer in einer kontinuierlichen Reaktion unter Wärmeabgabe verfeuert. Die erhitzten Abgase werden über die Öffnung an die freie Umgebung abgegeben und können beispielsweise in Heizungen aller Art, Trocknungsanlagen, thermischen Nachverbrennungseinrichtungen, Umweltsystemen, Härteöfen oder in sonstigen verfahrenstechnischen Anlagen genutzt werden. Als Brennstoff kommen beispielsweise handelsübliche, gereinigte Gase wie Stadt-, Fern-, Erd- oder Flüssiggas sowie deren Gemische in Betracht. Auch Heizöl, Petroleum sowie andere flüssige oder pastöse Brennstoffe können verfeuert werden.

Die aus dem Stand der Technik allgemein bekannten Brenner lassen sich in zwei Kategorien einteilen. In die erste Kategorie fallen Brenner, bei denen das Oxidationsmittel mit dem Brennstoff als Gemisch in die Brennkammer eingedüst wird. Solche Brenner werden auch als Vorgemisch-Brenner bezeichnet. Brenner der zweiten Kategorie haben im Gegensatz dazu eine getrennte Zuleitung des Oxidationsmittels sowie des Brennstoffs bis zur Brennkammer, sodass eine Vermischung beider Stoffe erst in dieser stattfindet. Die Brenner der ersten Kategorie weisen zwar den Vorteil auf, dass das Gemisch aus Oxidationsmitteln und Brennstoff in einer sehr homogenen Mischung in der Brennkammer zur Verfügung steht, der Nachteil ist aber, dass eine absolute Sicherheit gegen Flammrückschläge nicht gegeben ist. Derartige Flammrückschläge sind bei Brennern der zweiten Kategorie durch die getrennte Zuführung des Oxidationsmittels und des Brennstoffes ausgeschlossen. Jedoch ist die Homogenität des Gemisches in der Brennkammer nicht optimal. Sie ist jedenfalls schlechter als das durch Brenner der ersten Kategorie erzielte Gemisch.

Die Erfindung hat daher zum Ziel, die Vorteile von Brennern der zweiten Kategorie mit den Vorteilen der Brenner der ersten Kategorie zu vereinbaren, das heißt einerseits, zuverlässig Flammrückschläge auszuschließen, jedoch gleichzeitig eine hohe Homogenität des Gemisches sicherzustellen und damit sowohl die Flammentemperatur, als auch den Stickstoffausstoß herabzusetzen.

Zur Erreichung einer möglichst optimalen Kombination zwischen Sicherheit und Verbrennung zeigt die DE 10 2018 112 540 der Anmelderin bereits einen Brennstoffdüsensystem, das im Wesentlichen kreisrund angeordnet und so eingerichtet ist, dass es auf wenigstens einem äußeren Ring ein magereres, und auf wenigstens einem inneren Ring ein fetteres Gemisch, insbesondere ein Brennstoff-/ Oxidator-Gemisch, erzeugt. Auch die DE 10 2017 116 529 der Anmelderin verfolgt das Ziel, den Verbrennungsvorgang zu optimieren, in dem eine bessere Homogenität des Gemisches in der Brennkammer erzielt wird.

Die vorliegende Erfindung bildet die Grundidee weiter aus und verbessert diese Erkenntnisse und Untersuchungen.

Erfindungsgemäß wird nunmehr vorgeschlagen, dass die Elemente des Brennstoffdüsensytems möglichst dünn, schlank und stromlinienförmig ausgeführt sind. Es hat sich herausgestellt, dass an jeder Anströmkante Verwirbelungen entstehen, da jedes in den Luftstrom eingebaute Bauteil von diesem Luftstrom umströmt werden muss. An der stromabwärts liegenden Abrisskante entstehen zusätzlich in den Verwirbelungszonen Rezirkulationen. Diese Verwirbelungen, insbesondere die Rezirkulationen, führen zu einem Vermischen des inneren fetteren und äußeren magereren Brennstoff-Luft-Gemisches. Dies führt wiederum zu einer erhöhten Flammentemperatur und damit zu einer erhöhten Stickoxidbildung.

Es ist damit das Ziel der vorliegenden Erfindung, diese Verwirbelungen möglichst weitgehend zu vermeiden. Dieses gelingt durch eine möglichst schlanke, dünne Auslegung aller verwendeten Bauteile, die zugleich so stromlinienförmig wie möglich ausgeführt sein sollten.

Alternativ oder kumulativ sieht die Erfindung auch vor, dass das Flächenverhältnis des inneren Rings zu dem Flächenverhältnis des äußeren Rings 1:2,5 bis 1:3,9, vorzugsweise genau bei 1:3,1, beträgt.

Ein solches Flächenverhältnis hat sich bei diversen Versuchen als optimal herausgestellt. Es ist teilweise vom Brennwert des verwendeten Gases abhängig. Bei Flächenverhältnissen von 1:<2,5 steigt die Stickoxidbildung bei stabiler Flamme deutlich an. Bei Flächenverhältnissen 1:>3,9 nimmt die Flammenstabilität ab, ohne dass sich die Stickoxide weiter reduzieren.

Weiter ist alternativ oder kumulativ vorgesehen, dass der maximale Drallwinkel (α) des Brennstoffdüsensystems außen zwischen 30 ° bis 60 °, vorzugsweise genau 48 ° beträgt.

Bei diesem Drallwinkel beginnen sich im äußeren Bereich erste geringe Rezirkulationen zu bilden. Der Drall darf daher nicht stärker als angegeben sein. Auf der anderen Seite ist der Drall noch stark genug, um die Flamme zu stabilisieren. Bei geringeren Drallwinkeln wird die Flamme hingegen instabil.

In weiterer Ausgestaltung nimmt der Drallwinkel (α) von außen nach innen kontinuierlich ab.

Da der innere fettere Bereich stabiler brennt als der äußere magerere Bereich, ist der Drall nur notwendig, um stabile Verhältnisse in der Flamme zu erzeugen. Allerdings darf es zwischen dem inneren, fetteren Bereich und dem äußeren, magereren Bereich keinen Sprung des Dralls geben, da sich an dieser Scherfläche andernfalls innerer und äußerer Bereich mischen würden. Da im inneren Bereich wenig oder kein Drall von Vorteil ist, im äußeren Bereich jedoch Drall notwendig ist, und keinen Sprung von innen nach außen erzeugt werden soll, muss der Drall von außen nach innen kontinuierlich abnehmen.

Weiter ist alternativ oder kumulativ vorgesehen, dass die Drallelemente in Bogenform ausgelegt sind. Solche bogenförmigen Schaufeln bilden beim Erzeugen des Dralls wesentlich weniger Rezirkulationen aus als gerade ausgebildete Schaufeln. Die Luft wird in Strömungsrichtung mitgenommen, die Richtungsänderung erfolgt sanft entlang des Bogens.
In weiterer Ausgestaltung ist vorgesehen, dass der Drallwinkel (α) innen bei 0 liegt, also von außen nach innen bis auf 0 abnimmt.

In Ausgestaltung weist das Brennstoffdüsensystem stromaufwärts ein Lochblech zur Homogenisierung des Luftstroms vor der Mischeinheit über den gesamten Querschnitt auf.

Die durch das Gehäuse zugeführte Verbrennungsluft muss mit einer über den Querschnitt gleichen Strömungsgeschwindigkeit auf die Mischeinheit treffen, damit ein homogenes Gas-Luft-Gemisch innen und außen entstehen kann. Durch die Umlenkung der Verbrennungsluft beim Eintritt in das Brennergehäuse entstehen jedoch stark unterschiedliche Strömungsgeschwindigkeiten. Diese werden durch das vorgeschlagene Lochblech vor der Mischeinheit aufgehoben und homogenisiert.

Um Verwirbelungen zu vermeiden, sollte der Bauraum zwischen Lochblech und innerem Ring ausschließlich Elektroden und keine weiteren Bauteile aufweisen. Vor Eintreffen des Luftstroms auf die Mischeinheit ist jede Verwirbelung zu vermeiden. In Ausgestaltung ist auch eine Zuführung der Elektroden von der Seite denkbar. Dies wäre für den Brenner von zusätzlichem Vorteil, wenn auch in der Praxis eher schwierig zu verwirklichen.

Weiter ist wenigstens ein doppelwandiges Rohr zum Transport von Brennstoff außerhalb des Gehäusequerschnitts zum Brennstoffdüsensystem vorgesehen. Auch diese Anordnung verfolgt das Ziel, keine Verwirbelungen zu erzeugen.

In alternativer Ausgestaltung ist wenigstens ein doppelwandiges Rohr ganz außen innerhalb des Brennerquerschnitts zum Transport von Brennstoff am Rand des Gehäusequerschnitts zum Brennstoffdüsensystem vorgesehen. In diesem Fall, in dem sich Verwirbelungen durch das doppelwandige Rohr nicht vermeiden lassen, schaden sie außen weniger als innen.

Der Querschnitt des Drallerzeugers soll so ausgebildet sein, dass der Brennstoff nach Innen geführt wird. Auf diese Weise sind keine zusätzlichen Gaskanäle notwendig. Diese erzeugen andernfalls ebenfalls Verwirbelungen und Rezirkulationen.

Zwischen dem Inneren und Äußeren des Brennstoffdüsensystems kann eine Trennwand vorgesehen sein. Damit wird bei der Erzeugung des Dralls der Luftstrom axial gerichtet, und zwar ggf. zusätzlich zu dem erfindungsgemäßen Lochblech vor der Mischeinheit.

In weiterer, besonders vorteilhafter Ausgestaltung ist am stromabseitigen Ende der Trennwand eine Lippe zur Ausbildung einer Rezirkulationszone vorgesehen. Diese kleinere Rezirkulationszone ist notwendig, um den fetteren und magereren Bereich in einem kleinen ringförmigen Bereich direkt vor der Mischeinheit zu mischen. In dieser Rezirkulationszone bildet sich somit ein Flammenring aus, der die Reaktion im Brenner in Gang hält und ein Abheben der Flamme verhindert.

In besonders vorteilhafter Ausgestaltung verlaufen die Trennwand und die Lippe des Brennstoffdüsensystems tangential durch den inneren Bereich der Zündeinrichtung des Brenners. Nur hinter dieser Lippe bildet sich sofort ein zündfähiges Gemisch, daher kann nur hier der Brenner direkt nach Gasaustritt gezündet werden.

Ebenfalls kann die Trennwand und die Lippe des Brennstoffdüsensystems tangential durch den inneren Bereich der Flammenüberwachungseinrichtung verlaufen, da hier ebenfalls ein zündfähiges Gemisch, das sofort gezündet werden kann, vorhanden ist.

Nur hinter der Lippe bildet sich sofort eine Flamme aus, die zur Überwachung der Flamme mit Hilfe einer Elektrode notwendig ist. An anderen Stellen als an der vorgeschlagenen, kann kein Flammensignal per Ionisation gemessen werden.

In weiterer Ausgestaltung ist alternativ oder kumulativ der in die Brennkammer führende Brennermund als gerades Rohr ausgeführt. Viele bekannte Brenner weisen einen konischen Brennermund auf. Dieser wirkt sich zwar positiv auf die Flammenstabilität aus, sorgt jedoch für starke Verwirbelungen und Rezirkulationen, was ebenfalls negative Auswirkungen auf den Stickoxidausstoß hat.

Vorgeschlagen wird weiter, dass der Stoff, insbesondere der Brennstoff aus dem Kanalsystem des Brennstoffdüsensystems im rechten Winkel auf den Drall des Oxidators trifft. Wenn die Strömungen in einem großen Winkel aufeinandertreffen, wird eine gute Vermischung von Oxidator und Brennstoff erzeugt. Da aber keinesfalls Brennstoff stromab vor die Mischeinheit gelangen darf, beträgt der maximale Winkel 90°, in dem beide Medien aufeinandertreffen dürfen, ohne dass die Gefahr besteht, dass Brennstoff stromauf vor die Mischeinheit gelangt.

Schließlich ist vorgesehen, dass der mittlere Bereich der Mischeinheit so ausgebildet ist, dass hinter dieser ein UV-Sensor die Flamme detektieren kann.

Alternativ kann zur Überwachung mit einer Elektrode und einem Ionisationssignal die Flamme auch optisch überwacht werden. Voraussetzung hierfür ist, dass ein Guckloch vorhanden ist, über den ein optischer Sensor die Flamme erkennen kann. Um trotz des stromaufwärts angeordneten Lochblechs die Flamme optisch überwachen zu können, ist ein Schaurohr vom Abschlussflansch des Brennergehäuses bis zum Lochblech erforderlich.

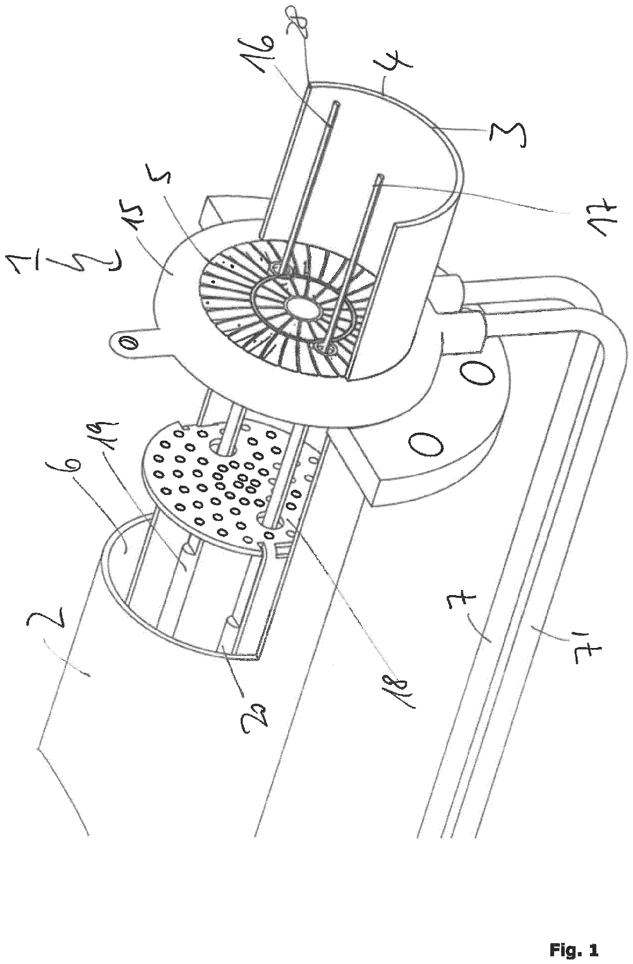

Die Erfindung ist nachstehend anhand der Zeichnung beispielhaft näher erläutert. Diese zeigt in
- Fig. 1: eine Gesamtansicht des zur Hälfte aufgeschnittenen Brenners mit doppelwandigem Rohr außerhalb des Gehäusequerschnitts
- Fig. 2: eine Gesamtansicht des zur Hälfte ausgeschnittenen Brenners mit doppelwandigem Rohr innerhalb des Gehäusequerschnitts
- Fig. 3: eine Gesamtansicht des Brennstoffdüsensystems mit doppelwandigem Rohr außerhalb des Gehäusequerschnitts von vorne
- Fig. 4: einen Querschnitt des Brennstoffdüsensystems zur Definition des maximalen Drallwinkel (α) sowie zur Erläuterung der Bogenform des Drallelements und zur Erläuterung des nach innen abnehmenden Drallwinkels
- Fig. 5: einen Querschnitt der Lippe zur Ausbildung einer Rezirkulationszone.

Ein allgemein mit 1 bezeichneter Brenner weist ein Gehäuse 2 mit einem Brennrohr 3 auf, das an dem dem Gehäuse 2 abgewandten Ende eine Öffnung 4 aufweist. In dem Gehäuse 2 ist ein Brennstoffdüsensystem 5 angeordnet, dessen doppelwandiges Rohr 15 außerhalb des Querschnitts des Gehäuses 2 liegt. Innerhalb des Gehäuses 2, in dem Träger 19, 20 das Brennstoffdüsensystem 5 durchdringen, liegen eine Zündeinrichtung 16 und eine Flammenüberwachung 17. Vor dem Brennstoffdüsensystem 5 ist ein Lochblech 18 angeordnet, das ebenfalls von dem Träger 19 für die Zündeinrichtung 16 und dem Träger 20 für die Flammenüberwachung 17 durchdrungen wird.

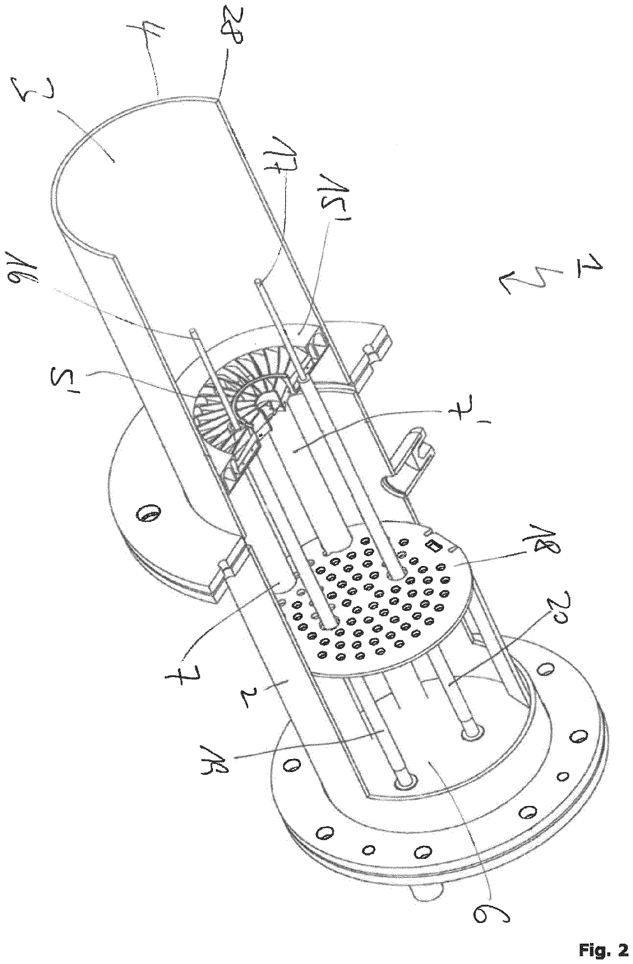

Figur 2 zeigt eine abgewandelte Ausführungsform, bei dem ein Brennstoffdüsensystem 5' mit einem innerhalb des Querschnitts des Gehäuses 2 angeordneten doppelwandigen Rohr 15' vorgesehen ist.

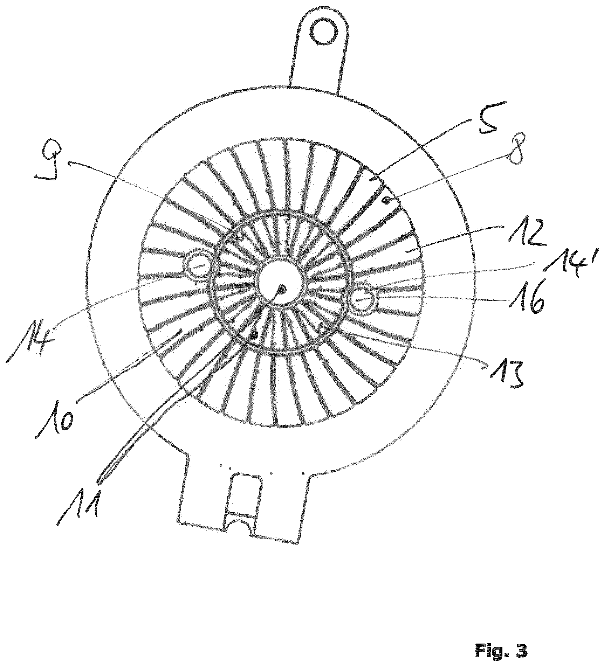

Fig. 3 zeigt eine Aufsicht auf das Brennstoffdüsensystem 5 mit einem doppelwandigen Rohr 15 außerhalb des Querschnitts des Gehäuses 2 von vorn, also aus Sicht von stromabwärts. Der äußere Ring 12, der beispielsweise durch größere Lamellen 8 in 32 Teilsegmente aufgeteilt ist, bildet einen ersten Luftquerschnitt 10 außen, während der innere Ring 13, der beispielsweise durch kleinere Lamellen 9 in 16 Teilflächen segmentiert wird, den Luftquerschnitt 11 innen bildet. Der innerer Kreis gehört ebenfalls zum inneren Luftquerschnitt, vgl. Fig. 3.

Beide Flächenverhältnisse des inneren Rings 13, also des Luftquerschnitts 11 innen zu dem Flächenverhältnis des äußeren Rings 12, also des Luftquerschnitts außen, liegt zwischen 1:2,5 bis 1:3,9 vorzugsweise genau bei 1:3,07. Je 1 Flächenanteil innen zu je 3,1 Flächenanteile außen) Fig. 3 zeigt darüber hinaus eine Durchbrechung 14 für den Träger 19 der Zündeinrichtung 16 und eine weitere Durchbrechung 14' für die Trageinrichtung der Flammenüberwachung 17.

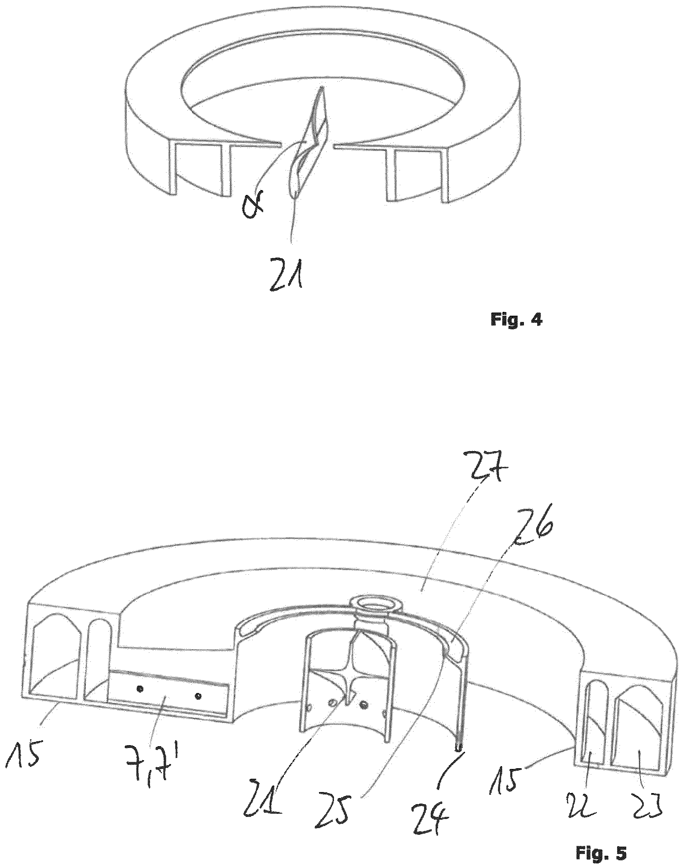

Fig. 4 zeigt einen Querschnitt des Brennstoffdüsensystems 5 mit einem in Bogenform ausgelegten Drallelement 21, bei dem der Drallwinkel (α) von außen nach innen abnimmt, und zwar im Extremfall bis zu 0°.

Fig. 5 zeigt schließlich einen aufgeschnittenen Querschnitt des doppelwandigen Rohrs 15, 15' mit den beiden Teilrohren 22, 23, eine Trennwand 24, den Brennstoffkanal 7 bzw. 7' in Strömungsrichtung des Oxidators gesehen. Am stromabseitigen Ende 26 befindet sich eine Lippe 25 zur Ausbildung einer Rezirkulationszone 27 in stromabseitiger Richtung am Brennermund 28.

Natürlich ist die Erfindung nicht auf die dargestellten Ausführungsbeispiele beschränkt. Weitere Ausgestaltungen sind möglich, ohne den Grundgedanken zu verlassen.

### Bezugszeichenliste:

- 1: Brenner
- 2: Gehäuse
- 3: Brennrohr
- 4: Öffnung
- 5, 5': Brennstoffdüsensystem
- 6: Oxidator-Kanal
- 7, 7': Brennstoffkanal
- 8: größere Lamellen
- 9: kleinere Lamellen
- 10: Luftquerschnitt außen
- 11: Luftquerschnitt innen
- 12: äußerer Ring
- 13: innerer Ring
- 14, 14': Durchbrechung
- 15, 15': doppelwandiges Rohr
- 16: Zündeinrichtung
- 17: Flammenüberwachung
- 18: Lochblech
- 19: Träger
- 20: Träger
- 21: bogenförmiges Drallelement
- 22: Teilrohr
- 23: Teilrohr
- 24: Trennwand
- 25: Lippe
- 26: stromabseitiges Ende
- 27: Rezirkulationszone
- 28: Brennermund

## Patentansprüche

1. Brenner (1) mit einem Gehäuse (2), an dem ein Brennrohr (3) angeordnet ist, wobei das Brennrohr (3) an dem an dem Gehäuse (2) abgewandten Ende eine Öffnung (4) aufweist, und wobei das Gehäuse (2) wenigstens zwei voneinander getrennte Kanäle (6, 7) aufweist, durch die unterschiedliche Stoffe, insbesondere ein Brennstoff und ein Oxidator durchströmen, die sich in einer Brennkammer (8) vermischen, wobei die Stoffe in einem Brennstoffdüsensystem (5, 5') münden, das im Wesentlichen kreisrund angeordnet ist, und so eingerichtet ist, dass es auf wenigstens einem äußeren Ring (12) ein magereres, auf wenigstens einem inneren Ring (13) ein fetteres Gemisch, insbesondere Brennstoff-/Oxidator-Gemisch erzeugt,
**dadurch gekennzeichnet,**
**dass** die Elemente des Brennstoffdüsensystems (5, 5') möglichst dünn, schlank und stromlinienförmig ausgeführt sind.

2. Brenner (1) nach Anspruch 1,
**dadurch gekennzeichnet,**
**dass** das Flächenverhältnis des inneren Rings (13) zu dem Flächenverhältnis des äußeren Rings (12) 1:2,5 bis 1:3,9, vorzugsweise 1:3,1 beträgt.

3. Brenner (1) nach Anspruch 1, 2,
**dadurch gekennzeichnet,**
**dass** der maximale Drallwinkel (α) des Brennstoffdüsensystems (5, 5') außen zwischen 30° bis 60°, vorzugsweise 48 ° beträgt.

4. Brenner nach Anspruch 1, 2 und/oder 3,
**dadurch gekennzeichnet,**
**dass** der Drallwinkel (α) von außen nach innen kontinuierlich abnimmt.

5. Brenner (1) nach einem oder mehreren der Ansprüche 1 - 4
**dadurch gekennzeichnet,**
**dass** die Drallelemente (21) in Bogenform ausgelegt sind.

6. Brenner nach einem oder mehreren der Ansprüche 1 - 5,
**dadurch gekennzeichnet,**
**dass** der Drallwinkel (α) innen bei "0" liegt.

7. Brenner nach einem oder mehreren der Ansprüchen 1 - 6,
**dadurch gekennzeichnet,**
**dass** das Brennstoffdüsensystem (5, 5') stromaufwärts ein Lochblech (18) zur Homogenisierung des Luftstroms stromaufwärts vor der Mischeinheit über den gesamten Querschnitt aufweist.

8. Brenner nach einem oder mehreren der Ansprüche 1 - 7,
**dadurch gekennzeichnet,**
**dass** der Bauraum zwischen Lochblech (18) und innerem Ring (13) ausschließlich Elektroden, insbesondere eine Zündeinrichtung (16) und eine Flammenüberwachung (17), und keine weiteren Bauteile aufweist.

9. Brenner nach einem oder mehreren der Ansprüche 1 - 8,
**dadurch gekennzeichnet,**
**dass** wenigstens ein doppelwandiges Rohr (15) zum Transport von Brennstoff außerhalb des Gehäusequerschnitts (2) zum Brennstoffdüsensystem (5, 5') angeordnet ist.

10. Brenner nach einem oder mehreren der Ansprüche 1 - 9,
**dadurch gekennzeichnet,**
**dass** wenigstens ein doppelwandiges Rohr (15') ganz außen innerhalb des Brennerquerschnitts (2) zum Transport von Brennstoff am Rand des Gehäusequerschnitts (2) zum Brennstoffdüsensystem (5, 5') angeordnet ist.

11. Brenner nach deinem oder mehreren Ansprüchen 1 - 10,
**dadurch gekennzeichnet,**
**dass** der Querschnitt des Drallerzeugers (21) so ausgebildet ist, dass der Brennstoffkanal (7, 7') nach innen geführt wird.

12. Brenner nach einem oder mehreren der Ansprüche 1 - 11,
**dadurch gekennzeichnet,**
**dass** zwischen dem inneren Ring (13) und dem äußeren Ring (12) des Brennstoffdüsensystems (5, 5') eine Trennwand (24) vorgesehen ist.

13. Brenner nach Anspruch 12,
**dadurch gekennzeichnet,**
**dass** am stromabseitigen Ende (26) der Trennwand (24) eine Lippe (25) zur Ausbildung einer Rezirkulationszone (27) vorgesehen ist.

14. Brenner nach Anspruch 12 und/oder 13,
**dadurch gekennzeichnet,**
**dass** die Trennwand (24) und die Lippe (25) des Brennstoffdüsensystems (5, 5') tangential durch den inneren Bereich der Zündeinrichtung (16) des Brenners (1) verlaufen.

15. Brenner (1) nach wenigstens einem der Ansprüche 1 - 14,
**dadurch gekennzeichnet,**
**dass** der in die Brennkammer (8) führende Brennermund (28) als gerades Rohr ausgeführt ist.

16. Brenner nach Ansprüchen 12 - 15,
**dadurch gekennzeichnet,**
**dass** die Trennwand (24) und die Lippe (25) des Brennstoffdüsensystems (5, 5') tangential durch den inneren Bereich der Flammenüberwachungseinrichtung (17) verlaufen.

17. Brenner nach einem oder mehreren der Ansprüchen 1 - 16,
**dadurch gekennzeichnet,**
**dass** der Stoff, insbesondere der Brennstoff, aus dem Kanalsystem des Brennstoffdüsensystems (5, 5') im rechten Winkel auf den Drall des Oxidators trifft.

18. Brenner nach einem oder mehreren der Ansprüchen 1-17,
**dadurch gekennzeichnet,**
**dass** der mittlere Bereich des Brennstoffdüsensystems (5, 5') so ausgebildet ist, dass hinter diesem ein UV-Sensor die Flamme detektieren kann.
